# EUROPÄISCHE PATENTSCHRIFT

(11) **EP 3 940 391 B1**
(45) Veröffentlichungstag und Bekanntmachung des Hinweises auf die Patenterteilung: **03.05.2023**
(21) Anmeldenummer: 21183878.4
(22) Anmeldetag: 06.07.2021
(51) Int. Cl.: G01P 3/42, G01P 3/488, H02P 7/00, H02P 6/00

(54) **ANTRIEBSANORDNUNG MIT GESCHWINDIGKEITSSENSOR UND EIN FAHRZEUG MIT EINER SOLCHEN ANTRIEBSANORDNUNG**
DRIVE ASSEMBLY WITH SPEED DETECTOR AND VEHICLE WITH SUCH A DRIVE ASSEMBLY
DISPOSITIF D'ENTRAINEMENT AVEC CAPTEUR DE VITESSE ET VÉHICULE DOTÉ D'UN TEL DISPOSITIF D'ENTRAINEMENT

(30) Priorität: 16.07.2020 DE 102020208928
(43) Veröffentlichungstag der Anmeldung: 19.01.2022
(73) Patentinhaber: Robert Bosch GmbH, 70442 Stuttgart (DE)
(72) Erfinder: Techman, Witold, 74321 Bietigheim-Bissingen (DE); Schleining, Igor, 70437 Stuttgart (DE)

(56) Entgegenhaltungen:
- EP-B1- 0 903 844
- US-A1- 2003 196 842
- US-A1- 2020 052 639

## Beschreibung

### Stand der Technik

Die Erfindung betrifft eine Antriebsanordnung, insbesondere für ein Fahrzeug, nach dem Oberbegriff des Anspruchs 1 sowie ein Fahrzeug mit Merkmalen des nebengeordneten Anspruchs.

Zur Steuerung der Drehzahl einer E-Maschine, beispielsweise in elektrischen Achsen (E-Achse), ist eine Drehzahlsensorik erforderlich. Üblicherweise wird der Drehzahlgeber auf der Rotorwelle sowie der Drehzahlsensor im Gehäuse positioniert und von dort aus das Signal über eine Steckverbindung an einen Inverter übertragen.

DE 10 2013 011 532 B4 offenbart eine Drehzahlmessvorrichtung für Getriebe mit koaxial zueinander angeordneten Wellen. Dabei ist die Rotorwelle als Hohlwelle und damit als die äußere Welle ausgeführt. Zur Ermittlung der Drehzahl der Hohlwelle wird eine Lösung vorgeschlagen, bei der ein Drehzahlgeber an der Außenfläche der Hohlwelle angeordnet ist und ein Drehzahlsensor durch eine Öffnung die Bewegung des Drehzahlgebers erfasst.

Bei der in DE 10 2013 011 532 B4 gezeigten koaxialen Bauweise wird die Abtriebswelle durch eine hohle Rotorwelle durchgeführt. Aus diesem Grund muss die Rotorwelle mit einem größeren Durchmesser ausgeführt werden. Daher kann eine standardisierte Drehzahlsensorik, die auf einen kleineren Standard Durchmesser ausgelegt ist, bei solch einem Konzept nicht oder nur nach umfangreichen Umbaumaßnahmen eingesetzt werden.

Die US 2020/052639 A1, EP 0 903 844 B1 und US 2003/196842 A1 offenbaren Antriebsanordnungen für Fahrzeuge mit elektrischem Antrieb.

### Offenbarung der Erfindung

Das der Erfindung zugrunde liegende Problem wird durch eine Antriebsanordnung gemäß Anspruch 1 gelöst.

Vorteilhafte Weiterbildungen der Erfindung sind in den abhängigen Ansprüchen genannt.

Erfindungsgemäß wird eine Antriebsanordnung für ein Fahrzeug vorgeschlagen, die eine elektrische Maschine mit einer Rotorwelle aufweist. Die elektrische Maschine, auch Elektromotor genannt, besteht aus einem Stator und einem Rotor. Der Rotor kann in Form einer ein Blechpaket aufweisenden Rotorwelle ausgebildet sein.

Die Antriebsanordnung umfasst weiter eine Zwischenwelle und eine Drehzahlsensorik zur Ermittlung der Drehzahl der Rotorwelle. Die Rotorwelle und die Zwischenwelle sind mittels einer, insbesondere konstanten, Übersetzung miteinander gekoppelt. Die Zwischenwelle ist durch die Rotorwelle antreibbar oder kann durch die Rotorwelle angetrieben werden. Somit stellt die Rotorwelle die Antriebswelle dar.

Die Drehzahlsensorik ist an der Zwischenwelle angeordnet und erfasst die Drehzahl der Zwischenwelle. Über das Übersetzungsverhältnis zwischen Rotorwelle und der Zwischenwelle kann aus der Drehzahl der Zwischenwelle die Drehzahl der Rotorwelle ermittelt werden. Dabei muss die Drehzahlsensorik weder an der Rotorwelle angeordnet sein, noch die Drehzahl der Rotorwelle mittels der Drehzahlsensorik erfasst werden.

Durch die Umpositionierung der Drehzahlsensorik auf die Zwischenwelle des Getriebes wird kein zusätzlicher Bauraum an der Rotorwelle benötigt. Hierdurch ist eine vergleichsweise kompakte Bauweise realisierbar.

Gemäß einer Weiterbildung kann die Drehzahlsensorik eine Recheneinrichtung aufweisen. Dabei kann die Recheneinrichtung anhand der Drehzahl der Zwischenwelle und dem Übersetzungsverhältnis, bspw. durch eine Multiplikation mit einem das Übersetzungsverhältnis wiederspiegelnden Faktor, die Drehzahl der Rotorwelle bestimmen. Alternativ dazu kann die Drehzahlsensorik elektrisch und/oder elektronisch mit einer Steuerung, z. B. einem Inverter, der elektrischen Maschine verbunden sein. Dabei kann die Steuerung derart eingerichtet sein, dass anhand der Drehzahl der Zwischenwelle und dem Übersetzungsverhältnis, bspw. durch eine Multiplikation mit einem das Übersetzungsverhältnis wiederspiegelnden Faktor, die Drehzahl der Rotorwelle bestimmt werden kann. Mit anderen Worten, die Umrechnung der Drehzahl der Zwischenwelle in die Drehzahl der Rotorwelle kann über das Übersetzungsverhältnis direkt in der Drehzahlsensorik realisiert werden, oder mittels eines zusätzlichen Elements (Steuerung) außerhalb der Drehzahlsensorik durchgeführt werden.

Gemäß einer Weiterbildung kann die Drehzahlsensorik einen Drehzahlgeber und einen Drehzahlsensor aufweisen. Dabei kann der Drehzahlgeber an oder in der Zwischenwelle angeordnet sein. Dabei kann der Drehzahlgeber als Potentiometergeber, Inkrementalgeber oder ein Absolutwertgeber ausgebildet sein. Der Drehzahlsensor kann die Recheneinrichtung umfassen oder elektrisch und/oder elektronisch mit der Steuerung der elektrischen Maschine verbunden sein. Der Drehzahlsensor kann in oder an einem Gehäuse, welches die Antriebsanordnung zumindest teilweise umgibt, angeordnet sein.

Gemäß einer Weiterbildung kann die Drehzahlsensorik als ein Resolver ausgebildet sein. Damit kann die Drehzahl und die Winkellage der Zwischenwelle bestimmt werden und auf die Drehzahl und die Winkellage der Rotorwelle geschlossen werden.

Gemäß einer Weiterbildung kann die Antriebsanordnung weiter mindestens eine Abtriebswelle und ein Differential umfassen. Dabei kann die mindestens eine Abtriebswelle über das Differential mit der Zwischenwelle gekoppelt sein. Dies kann getrieblich, bspw. mittels einer weiteren Übersetzung, realisiert werden. So kann die über die Rotorwelle erzeugte Drehung über die Zwischenwelle und das Differenzial auf die Abtriebswelle übertragen werden. Somit stellt die Rotorwelle die Antriebswelle dar, die z. B. ein auf der Abtriebswelle angeordnetes Rad antreibt. Vorzugsweise sind zwei Abtriebswellen, die eine Radachse darstellen, mit dem Differenzial gekoppelt. Das Differenzial kann über eine Ritzel-Zahnrad-Kopplung mit der Zwischenwelle gekoppelt sein.

Gemäß einer Weiterbildung kann die Rotorwelle als Hohlwelle ausgebildet sein.

Dadurch wird eine koaxiale Bauweise ermöglicht, so dass mehrere Wellen ineinander angeordnet werden können. Da die Drehzahlsensorik nicht an der Rotorwelle bzw. Hohlwelle angeordnet ist, ist die Dimensionierung der Hohlwelle nicht durch die Dimensionierung einer (bspw. standarisierten) Drehzahlsensorik beschränkt. Zudem muss kein Bauraum für die Anordnung einer Drehzahlsensorik an der Hohlwelle vorgesehen werden.

Gemäß einer Weiterbildung kann die mindestens eine Abtriebswelle zumindest teilweise (radial) innerhalb der Hohlwelle, insbesondere koaxial zur Hohlwelle, angeordnet sein. Hierdurch kann eine besonders kompakte Bauweise erzielt werden.

Üblicherweise weist eine als Hohlwelle ausgebildete Rotorwelle einen größeren Außendurchmesser auf, als eine nicht als Hohlwelle ausgebildete Rotorwelle. Damit würde die standardisierte Drehzahlsensorik, die üblicherweise an einer Rotorwelle angeordnet ist und an den kleineren Außendurchmesser einer nicht als Hohlwelle ausgebildeten Rotorwelle abgestimmt ist, nicht oder zumindest nicht ohne Weiteres an einer als Hohlwelle ausgebildeten Rotorwelle eingesetzt werden können. Da die Drehzahlsensorik erfindungsgemäß nicht auf der Rotorwelle angeordnet ist, sondern an der, insbesondere nicht als Hohlwelle ausgebildeten, Zwischenwelle angeordnet ist, kann weiterhin die standarisierte und bereits technisch bewährte Drehzahlsensorik verwendet werden. Eine Neuentwicklung und/oder Vergrößerung bzw. Anpassung der Drehzahlsensorik an den größeren Außendurchmesser der Hohlwelle wird hierdurch überflüssig. Die standardisierte Drehzahlsensorik ist bereits technisch bewährt und kostenoptimiert, sodass sich für die gesamte Antriebsanordnung Kostenvorteile ergeben.

Gemäß der Erfindung ist die Übersetzung zwischen der Rotorwelle und der Zwischenwelle als eine Ritzel-Zahnrad-Verbindung ausgebildet. Dabei kann die Rotorwelle ein Ritzel und die Zwischenwelle ein Zahnrad aufweisen. Hierdurch wird eine Reduzierung der Drehgeschwindigkeit von der Rotorwelle auf die Zwischenwelle realisiert. Damit kann die oftmals hohe Drehzahl der Rotorwelle der elektrischen Maschine reduziert werden. Wird die Drehzahl beispielsweise halbiert, so ergibt sich hieraus ein Übersetzungsfaktor 0,5, der zur Bestimmung der Drehzahl gemäß obiger Ausführungen verwendet werden kann. Selbstverständlich ist auch eine umgekehrte Umsetzung der Übersetzung, bei der die Drehzahl der Rotorwelle durch die Übersetzung auf die Zwischenwelle erhöht wird, denkbar.

Gemäß einer Weiterbildung können die Rotorwelle und/oder die Zwischenwelle und/oder die mindestens eine Abtriebswelle parallel zueinander angeordnet sind. Hierdurch lässt sich eine besonders kompakte Bauweise erzielen.

Erfindungsgemäß wird ein Fahrzeug, insbesondere ein Kraftfahrzeug, mit einer Antriebsanordnung gemäß obiger Ausführungen vorgeschlagen. Hinsichtlich der damit erzielbaren Vorteile wird auf die diesbezüglichen Ausführungen zur Antriebsanordnung verwiesen. Zur weiteren Ausgestaltung des Fahrzeugs können die im Zusammenhang mit der Antriebsanordnung beschriebenen Maßnahmen dienen.

Nachfolgend wird eine Ausführungsform der Erfindung unter Bezugnahme auf die beiliegenden Zeichnungen erläutert. Es zeigen:
- Figur 1: eine schematische Darstellung einer Antriebsanordnung;
- Figur 2: eine perspektivische Darstellung der Antriebsanordnung gemäß Figur 1 und
- Figur 3: eine weitere perspektivische Darstellung der Antriebsanordnung gemäß Figur 1.

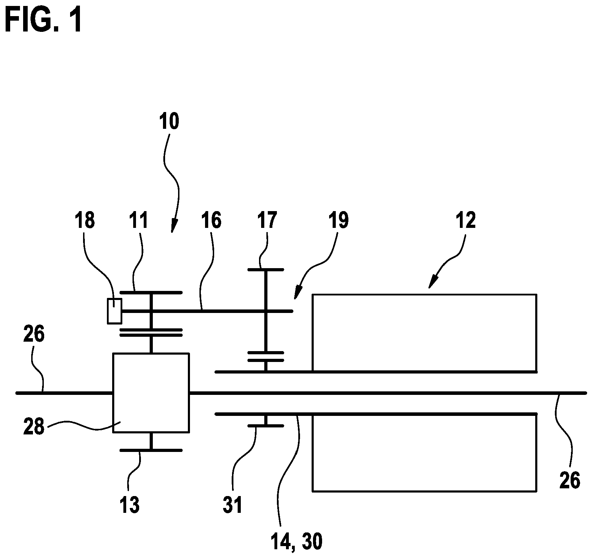

Die Antriebsanordnung trägt in Figur 1 insgesamt das Bezugszeichen 10. Die Antriebsanordnung 10 kann bspw. als E-Achse ausgebildet sein oder Bestandteil einer E-Achse bilden.

Die Antriebsanordnung 10 weist eine elektrische Maschine 12 mit einer Rotorwelle 14 auf. In der elektrischen Maschine 12 können zudem ein Stator und ein mit der Rotorwelle 14 gekoppelter Rotor angeordnet sein, der Rotorkomponenten, bspw. ein Blechpaket mit Wicklungen, aufweist (nicht dargestellt).

Vorliegend ist die Rotorwelle 14 als Hohlwelle 30 ausgeführt.

Die Antriebsanordnung 10 weist weiter eine Zwischenwelle 16 auf. Die Zwischenwelle 16 ist über eine Übersetzung 19 mit der Rotorwelle 14 gekoppelt. Vorliegend ist diese Übersetzung 19 mittels einer Ritzel-Zahnrad-Verbindung realisiert. Hierzu ist an der Hohlwelle 30 ein Ritzel 31 und an der Zwischenwelle 16 ein Zahnrad 17 angeordnet. Das Ritzel 31 und das Zahnrad 17 greifen durch jeweilige Verzahnungen des Ritzels 31 bzw. des Zahnrads 17 ineinander, so dass die Drehbewegung der Hohlwelle 30 auf die Zwischenwelle 16 in einem festen Übersetzungsverhältnis übertragen wird. Vorliegend wird die Drehzahl der Hohlwelle 30 durch die Übersetzung 19 auf die Zwischenwelle 16 reduziert.

An dem in Figur 1 links gezeigtem Ende der Zwischenwelle 16 ist eine Drehzahlsensorik 18 angeordnet. Selbstverständlich ist es denkbar, dass die Drehzahlsensorik 18 auch an einer anderen Stelle der Zwischenwelle 16, beispielsweise an dem in Figur 1 rechts gezeigtem Ende der Zwischenwelle 16, angeordnet sein kann. An welcher Stelle der Zwischenwelle 16 die Drehzahlsensorik 18 angeordnet wird, kann von dem zur Verfügung stehenden Bauraum und/oder von den Montagemöglichkeiten abhängen.

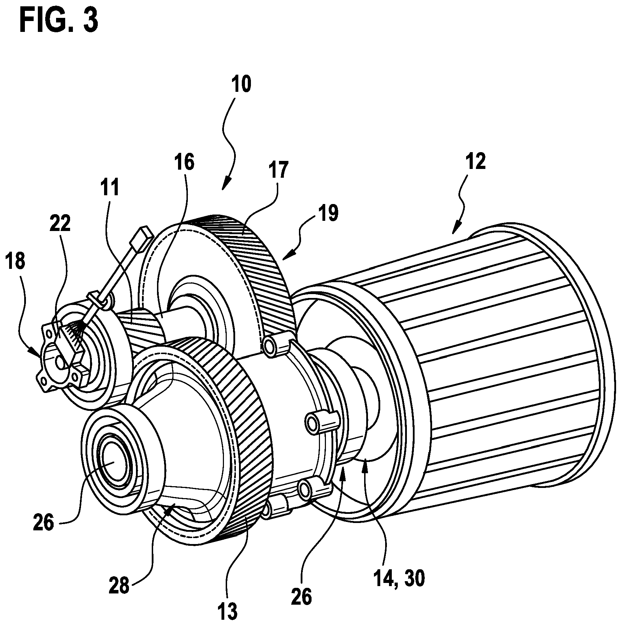

Die Drehzahlsensorik 18 erfasst die Drehzahl der Zwischenwelle 16. Hierzu weist die Drehzahlsensorik 18 einen nicht dargestellten Drehzahlgeber und einen (in Figur 3 gezeigten) Drehzahlsensor 22 auf. Dabei handelt es sich um eine standardisierte Drehzahlsensorik 18, die sich bereits technisch bewährt hat und kostenoptimiert ist. Vorliegend ist die Drehzahlsensorik 18 als ein (standarisierter) Resolver ausgestaltet.

Dadurch, dass zwischen der Zwischenwelle 16 und der Rotorwelle 14 bzw. Hohlwelle 30 ein konstantes Übersetzungsverhältnis besteht, kann aus der Drehzahl der Zwischenwelle 16 die Drehzahl der Rotorwelle 14 bestimmt werden. Dies kann beispielsweise durch eine Multiplikation eines Übersetzungsfaktors realisiert werden. Hierzu kann die Drehzahlsensorik 18 eine nicht dargestellte Recheneinrichtung aufweisen, oder mit einer ebenfalls nicht dargestellten Steuerung der elektrischen Maschine 12 elektrisch oder elektronisch verbunden sein.

Die Zwischenwelle 16 ist über eine weitere Ritzel-Zahnrad-Verbindung mit einem Differenzial 28 gekoppelt. Hierzu weist die Zwischenwelle 16 ein Ritzel 11 und das Differenzial 28 ein Zahnrad 13 auf (Antriebszahnrad 13 des Differenzials 28).

Die Antriebsanordnung 10 weist vorliegend zwei Abtriebswellen 26 auf, die eine Radachse darstellen oder mit einer Rachachse gekoppelt sein können. Die Abtriebswellen 26 sind über das Differenzial 28 mit der Zwischenwelle 16 getrieblich gekoppelt.

Die in Figur 1 links dargestellte Abtriebswelle 26 stellt dabei die Antriebsachse für ein linkes Rad dar und die in Figur 1 rechts dargestellte Abtriebswelle 26 stellt eine Antriebsachse für ein rechtes Rad dar. Die in Figur 1 rechts dargestellte Abtriebswelle 26 verläuft durch die Hohlwelle 30. Vorliegend sind die Hohlwelle 30 und die in Figur 1 rechts gezeigte Abtriebswelle 26 koaxial zueinander angeordnet. Hierdurch lässt sich eine besonders kompakte Bauweise erzielen.

Vorliegend sind die als Hohlwelle 30 ausgeführte Rotorwelle 14, die Zwischenwelle 16, sowie die beiden Abtriebswellen 26 parallel zueinander angeordnet. Hierdurch kann die kompakte Bauweise weiter verbessert werden.

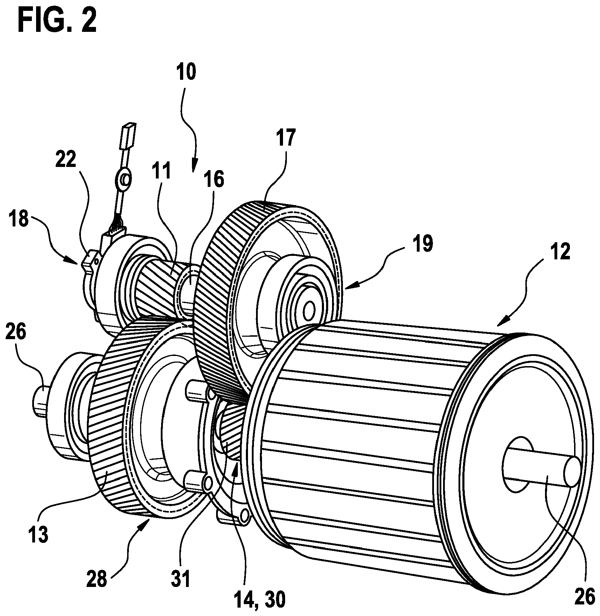

Die Figuren 2 und 3 zeigen die oben beschriebene Antriebsanordnung 10 aus zwei perspektivischen Ansichten. Die in Figuren 2 und 3 gezeigten Ritzel 13 und 31, sowie die Zahnräder 13 und 17 weisen vorliegend Schrägverzahnungen auf.

Aus Gründen der Übersichtlichkeit sind die beiden Abtreibswellen 26 in den Figuren 2 und 3 extrem verkürzt dargestellt.

## Patentansprüche

1. Antriebsanordnung (10) für ein Fahrzeug mit einer elektrischen Maschine (12) mit einer Rotorwelle (14) und einer Zwischenwelle (16), wobei die Rotorwelle (14) und die Zwischenwelle (16) mittels einer Übersetzung (19) miteinander gekoppelt sind und die Zwischenwelle (16) durch die Rotorwelle (14) antreibbar oder angetrieben ist, wobei die Übersetzung (19) zwischen der Rotorwelle (14) und der Zwischenwelle (16) als eine Ritzel-Zahnrad-Verbindung ausgebildet ist, **dadurch gekennzeichnet, dass** eine Drehzahlsensorik (18) zur Ermittlung der Drehzahl der Rotorwelle (14) an der Zwischenwelle (16) angeordnet ist und die Drehzahl der Zwischenwelle (16) erfasst.

2. Antriebsanordnung (10) nach Anspruch 1, **dadurch gekennzeichnet, dass** die Drehzahlsensorik (18) eine Recheneinrichtung aufweist, die anhand der Drehzahl der Zwischenwelle (16) und dem Übersetzungsverhältnis die Drehzahl der Rotorwelle (14) bestimmt oder dass die Drehzahlsensorik (18) elektrisch und/oder elektronisch mit einer Steuerung der elektrischen Maschine (12) verbunden ist, wobei die Steuerung derart eingerichtet ist, dass anhand der Drehzahl der Zwischenwelle (16) und dem Übersetzungsverhältnis die Drehzahl der Rotorwelle (14) bestimmt wird.

3. Antriebsanordnung (10) nach Anspruch 1 oder Anspruch 2, **dadurch gekennzeichnet, dass** die Drehzahlsensorik (18) einen Drehzahlgeber und einen Drehzahlsensor (22) aufweist, wobei der Drehzahlgeber an oder in der Zwischenwelle (16) angeordnet ist.

4. Antriebsanordnung (10) nach dem voranstehenden Anspruch, **dadurch gekennzeichnet, dass** die Drehzahlsensorik (18) ein Resolver (24) ist.

5. Antriebsanordnung (10) nach einem der voranstehenden Ansprüche,
**dadurch gekennzeichnet, dass** die Antriebsanordnung (10) weiter mindestens eine Abtriebswelle (26) und ein Differential (28) umfasst, wobei die mindestens eine Abtriebswelle (26) über das Differential (28) mit der Zwischenwelle (16) gekoppelt ist.

6. Antriebsanordnung (10) nach einem der voranstehenden Ansprüche,
**dadurch gekennzeichnet, dass** die Rotorwelle (14) als Hohlwelle (30) ausgebildet ist.

7. Antriebsanordnung (10) nach Ansprüchen 5 und 6 in Kombination, **dadurch gekennzeichnet, dass** die mindestens eine Abtriebswelle (26) zumindest teilweise innerhalb der Hohlwelle (30), insbesondere koaxial zur Hohlwelle (30), angeordnet ist.

8. Antriebsanordnung (10) nach einem der voranstehenden Ansprüche,
**dadurch gekennzeichnet, dass** die Rotorwelle (14) und/oder die Zwischenwelle (16) und/oder die mindestens eine Abtriebswelle (26) parallel zueinander angeordnet sind.

9. Fahrzeug, insbesondere ein Kraftfahrzeug, mit einer Antriebsanordnung (10) nach einem der voranstehenden Ansprüche.

## Claims

1. Drive assembly (10) for a vehicle, having an electric machine (12) having a rotor shaft (14) and a layshaft (16), wherein the rotor shaft (14) and the layshaft (16) are coupled to each other by way of a transmission (19), and the layshaft (16) is able to be driven, or is driven, by the rotor shaft (14), wherein the transmission (19) between the rotor shaft (14) and the layshaft (16) is configured as a pinion-to-gear wheel connection, **characterized in that** a rotating speed sensor system (18) for ascertaining the rotating speed of the rotor shaft (14) is disposed on the layshaft (16) and detects the rotating speed of the layshaft (16).

2. Drive assembly (10) according to Claim 1, **characterized in that** the rotating speed sensor system (18) has a computing installation which by means of the rotating speed of the layshaft (16) and the gearing ratio determines the rotating speed of the rotor shaft (14), or **in that** the rotating speed sensor system (18) is electrically and/or electronically connected to a controller of the electric machine (12), wherein the controller is specified in such a manner that the rotating speed of the rotor shaft (14) is determined by means of the rotating speed of the layshaft (16) and the gearing ratio.

3. Drive assembly (10) according to Claim 1 or Claim 2, **characterized in that** the rotating speed sensor system (18) has a rotating speed encoder and a rotating speed sensor (22), wherein the rotating speed encoder is disposed on or in the layshaft (16) .

4. Drive assembly (10) according to the preceding claim, **characterized in that** the rotating speed sensor system (18) is a resolver (24).

5. Drive assembly (10) according to one of the preceding claims, **characterized in that** the drive assembly (10) furthermore comprises at least one output shaft (26) and a differential (28), wherein the at least one output shaft (26) is coupled to the layshaft (16) by way of the differential (28).

6. Drive assembly (10) according to one of the preceding claims, **characterized in that** the rotor shaft (14) is configured as a hollow shaft (30).

7. Drive assembly (10) according to Claims 5 and 6 in combination, **characterized in that** the at least one output shaft (26) is at least partially disposed within the hollow shaft (30), in particular so as to be coaxial with the hollow shaft (30).

8. Drive assembly (10) according to one of the preceding claims, **characterized in that** the rotor shaft (14) and/or the layshaft (16) and/or the at least one output shaft (26) are disposed so as to be mutually parallel.

9. Vehicle, in particular a motor vehicle, having a drive assembly (10) according to one of the preceding claims.

## Revendications

1. Agencement d'entraînement (10) pour un véhicule avec une machine électrique (12) avec un arbre de rotor (14) et un arbre intermédiaire (16), l'arbre de rotor (14) et l'arbre intermédiaire (16) étant couplés l'un à l'autre au moyen d'une transmission (19) et l'arbre intermédiaire (16) pouvant être entraîné ou étant entraîné par l'arbre de rotor (14), la transmission (19) entre l'arbre de rotor (14) et l'arbre intermédiaire (16) étant configurée sous la forme d'une liaison pignon-roue dentée, **caractérisé en ce qu'**un système de détection de vitesse de rotation (18) est agencé sur l'arbre intermédiaire (16) pour déterminer la vitesse de rotation de l'arbre de rotor (14) et détecte la vitesse de rotation de l'arbre intermédiaire (16).

2. Agencement d'entraînement (10) selon la revendication 1, **caractérisé en ce que** le système de détection de vitesse de rotation (18) présente un dispositif de calcul qui détermine la vitesse de rotation de l'arbre du rotor (14) à l'aide de la vitesse de rotation de l'arbre intermédiaire (16) et du rapport de transmission, ou **en ce que** le système de détection de vitesse de rotation (18) est relié électriquement et/ou électroniquement à une commande de la machine électrique (12), la commande étant adaptée de telle sorte que la vitesse de rotation de l'arbre du rotor (14) est déterminée à l'aide de la vitesse de rotation de l'arbre intermédiaire (16) et du rapport de transmission.

3. Agencement d'entraînement (10) selon la revendication 1 ou la revendication 2, **caractérisé en ce que** le système de détection de vitesse de rotation (18) présente un indicateur de vitesse de rotation et un capteur de vitesse de rotation (22), l'indicateur de vitesse de rotation étant agencé sur ou dans l'arbre intermédiaire (16).

4. Agencement d'entraînement (10) selon la revendication précédente, **caractérisé en ce que** le système de détection de vitesse de rotation (18) est un résolveur (24).

5. Agencement d'entraînement (10) selon l'une quelconque des revendications précédentes, **caractérisé en ce que** l'agencement d'entraînement (10) comprend en outre au moins un arbre de sortie (26) et un différentiel (28), l'au moins un arbre de sortie (26) étant couplé à l'arbre intermédiaire (16) par l'intermédiaire du différentiel (28).

6. Agencement d'entraînement (10) selon l'une quelconque des revendications précédentes, **caractérisé en ce que** l'arbre de rotor (14) est configuré sous forme d'arbre creux (30).

7. Agencement d'entraînement (10) selon les revendications 5 et 6 en combinaison, **caractérisé en ce que** l'au moins un arbre de sortie (26) est agencé au moins partiellement à l'intérieur de l'arbre creux (30), notamment coaxialement à l'arbre creux (30).

8. Agencement d'entraînement (10) selon l'une quelconque des revendications précédentes, **caractérisé en ce que** l'arbre de rotor (14) et/ou l'arbre intermédiaire (16) et/ou l'au moins un arbre de sortie (26) sont agencés parallèlement les uns aux autres.

9. Véhicule, notamment véhicule automobile, avec un agencement d'entraînement (10) selon l'une quelconque des revendications précédentes.
